# EUROPEAN PATENT APPLICATION

(11) **EP 4 300 770 A1**
(43) Date of publication of application: **03.01.2024**
(21) Application number: 22759715.0
(22) Date of filing: 24.02.2022
(51) Int. Cl.: H02J 13/00, H02J 7/00, B60L 58/16, G16Y 10/40, G16Y 20/20, G16Y 40/20, H01M 10/42, H01M 10/48

(54) **REMOTE MONITORING SYSTEM, STORAGE BATTERY SYSTEM, AND CONTROL METHOD FOR REMOTE MONITORING SYSTEM**

(30) Priority: 26.02.2021 JP 2021030687
(71) Applicant: Hitachi, Ltd., Chiyoda-ku Tokyo 100-8280 (JP)
(72) Inventor: YONEMOTO, Masahiro, Tokyo 100-8280 (JP); SAKAGUCHI, Honami, Tokyo 100-8280 (JP); SHINOMIYA, Takeshi, Tokyo 100-8280 (JP); TAKAHASHI, Chiaki, Tokyo 100-8280 (JP); NAITO, Shunya, Tokyo 100-8280 (JP); MARUKO, Takuya, Tokyo 100-8280 (JP); DAIRAKU, Yosuke, Tokyo 100-8280 (JP)
(74) Representative: MERH-IP Matias Erny Reichl Hoffmann Patentanwälte PartG mbB
(86) International application number: PCT/JP2022/007578
(87) International publication number: WO 2022/181680

(57) **Abstract**

The purpose of the present invention is to provide a technique for improving the accuracy of a deterioration prediction model, and appropriately changing a limit value. To this end, a remote monitoring system according to the present invention comprises: a plurality of storage battery systems; and an external server. The external server includes: a data storage unit which stores operation history data on a storage battery, received from the plurality of storage battery systems; an operation history data analysis unit which analyzes the operation history data stored in the data storage unit, and calculates parameters required for predicting deterioration of the storage battery; and a life prediction unit which predicts the life of the storage battery of each storage battery system by using the parameters calculated by the operation history data analysis unit and the operation history data received from each storage battery system.

## Description

### Technical Field

The present invention relates to a remote monitoring system, a storage battery system, and a control method for a remote monitoring system.

### Background Art

The deterioration speed of a storage battery such as a lithium-ion battery varies greatly depending on conditions of a load such as the temperature, the state of charge (SOC), and the current. In addition, in the case of a storage battery system that uses a combination of a large number of battery cells, such as a storage battery system mounted on a railway vehicle, cooling conditions may become varied among the battery cells depending on their arrangement, and may change the temperature transitions of the battery cells while the vehicle is in service. Therefore, it is difficult to conduct comprehensive evaluations on how the conditions of the load are correlated with the deterioration speed of the storage battery in a preliminary test, in an attempt to achieve a predetermined battery life through a designing of a storage battery system. Consequently, to ensure the predetermined battery life, it is necessary to ensure larger margins in the design of the storage battery system, e.g., by increasing the number of the storage batteries mounted on the vehicle, or keeping the current limit value low.

To address this issue, the techniques disclosed in PTL 1 and PTL 2 bring the actual battery life close to the target life by regularly updating the prediction of a degree of the deterioration progress, taking the actual degree of the deterioration progress into consideration, and by raising or lowering a limit such as a current limit value.

### Citation List

### Patent Literature

PTL 1: JP 2020-174489 A
PTL 2: JP 2020-174490 A

### Summary of Invention

### Technical Problem

The techniques disclosed in PTL 1 and PTL 2 have enabled the actual conditions of the load of the storage battery to be reflected to the limit value. However, an appropriate change of the limit value is not possible as long as a deterioration prediction model does not have sufficient precision.

Therefore, an object of the present invention is to provide a technology capable of improving the precision of the deterioration prediction model, and changing the limit value appropriately.

### Solution to Problem

In order to address the issue described above, one representative remote monitoring system according to the present invention includes a plurality of storage battery systems and an external server. The external server includes: a data storage unit that stores therein operation history data on a storage battery, received from the plurality of storage battery systems; an operation history data analysis unit that analyzes the operation history data stored in the data storage unit, and that calculates a parameter required in predicting deteriorations of storage batteries; and a life prediction unit that predicts a life of a storage battery in each of the storage battery systems by using the parameter calculated by the operation history data analysis unit and the operation history data received from corresponding one of the storage battery systems.

### Advantageous Effects of Invention

According to the present invention, it becomes possible to improve the precision of the deterioration prediction model, so that the limit value can be changed appropriately.

Problems, configurations, and advantageous effects other than those explained above will become clear in the following description of the embodiment.

### Brief Description of Drawings

FIG. 1 is a diagram illustrating a configuration of a remote monitoring system according to an embodiment.
FIG. 2 is a diagram illustrating an example of a method of predicting the life of a storage battery in each storage battery system.
FIG. 3 is a diagram illustrating an example of a method of predicting the life of a storage battery in each of the storage battery systems.
FIG. 4 is a diagram illustrating an example of a method of predicting the life of a storage battery in each of the storage battery systems.
FIG. 5 is a diagram illustrating an example of a method of predicting the life of a storage battery in each of the storage battery systems.
FIG. 6 is a flowchart illustrating a process performed by an external server according to the embodiment.
FIG. 7 is a chart illustrating how the wireless communication device according to the embodiment stores and transmits the operation history data.
FIG. 8 is a chart illustrating how the wireless communication device according to the embodiment stores and transmits the operation history data.
FIG. 9 is a diagram illustrating a configuration of a remote monitoring system according to a modification.
FIG. 10 is a diagram illustrating an example of content of an e-mail notification.
FIG. 11 is a flowchart illustrating a process performed by an external server according to a modification.

### Description of Embodiments

An embodiment of the present invention will now be explained with reference to some drawings. Note that this embodiment is not intended to limit the scope of the present invention in any way. In the drawings, the same parts are denoted by the same reference numerals.

### [Examples]

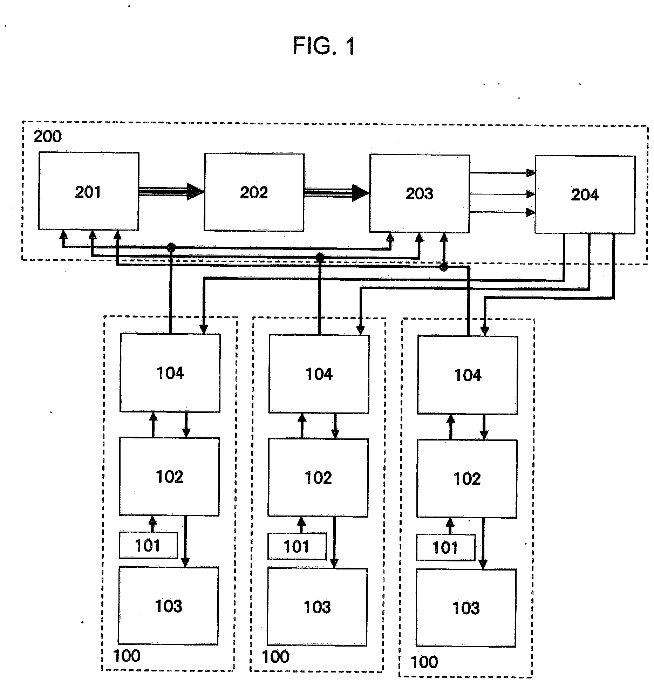

A configuration of an example of an application as a remote monitoring system for remotely monitoring storage batteries mounted on a railway vehicle will now be explained with reference to FIG. 1. FIG. 1 is a diagram illustrating a configuration of a remote monitoring system according to an embodiment.

The remote monitoring system includes a plurality of storage battery systems 100 and an external server 200. The number of storage battery systems 100 is not limited to any particular number, as long as the number is more than one.

The storage battery system 100 basically includes one or more storage batteries 101, a battery management device 102, a charge/discharge control device 103, and a wireless communication device 104.

Examples of the storage battery 101 include a lithium-ion battery, a lead storage battery, a nickel hydrogen battery, and a nickel cadmium battery, but types of the storage battery are not limited thereto.

The battery management device 102 is a device capable of monitoring the state of the storage battery 101 using information collected by a sensor or the like, and of sending data such as operation history data of the storage battery 101 to the wireless communication device 104. A temperature sensor for the storage battery 101 may collect measurements from each of the battery cells or each of the battery modules, or may make only measurements of representative measurement points. The number of temperature measurement points is not limited to a particular number.

The battery management device 102 is also capable of receiving information such as a limit value of the storage battery 101 from the wireless communication device 104, and sending information required in the charging/discharging control, to the charge/discharge control device 103.

In the present disclosure, the limit value for the storage battery means a numeric value related to the limitation imposed on the use of the storage battery, and examples include an upper bound of the current and a SOC range, but are not limited thereto.

The charge/discharge control device 103 is a device capable of controlling the charging/discharging of the storage battery 101, and of receiving information required for controlling the charging/discharging, from the battery management device 102.

An example of the wireless communication device 104 includes an IoT gateway, but not limited thereto. The wireless communication device 104 is capable of accumulating the operation history data of the storage battery 101, received from the battery management device 102, and transmitting the operation history data to the external server 200 over wireless communication. The wireless communication device 104 is also capable of receiving the limit value for the storage battery 101 from the external server 200, and sending the limit value to the battery management device 102, over wireless communication.

Note that the wireless communication device 104 and the battery management device 102 may be configured as one device, or may be configured as separate devices.

Examples of the operation history data transmitted from the wireless communication device 104 to the external server 200 include, but are not limited to, a current, a power, a voltage, a SOC, a temperature, an air temperature, a capacity retention ratio, a resistance increase rate, a train diagram, positioning information, a vehicle weight, car occupancy, and ridership.

The external server 200 includes a data storage unit 201, an operation history data analysis unit 202, a life prediction unit 203, and a limit value determination unit 204, but may also include other elements.

The data storage unit 201 can merge and store therein the pieces of operation history data on the respective storage batteries 101, received from the plurality of storage battery systems 100.

The operation history data analysis unit 202 is capable of performing a statistical analysis on the operation history data stored in the data storage unit 201, and updating a parameter required in predicting deterioration of the storage batteries 101.

Examples of a method for calculating the parameter include that calculates the parameter using a predetermined calculation formula, and that using a table populated with results of calculations having carried out in advance, but are not limited thereto.

Furthermore, by increasing the number of storage battery systems 100, it is also possible to improve the accuracy of the statistical analysis of the operation history data and the precision of the parameter required in predicting deterioration of the storage batteries 101.

The life prediction unit 203 can predict the life of the storage battery 101 in each of the storage battery systems 100, using the parameter calculated by the operation history data analysis unit 202 and the operation history data received from the storage battery system 100.

By increasing the precision of the parameter required in predicting deterioration of the storage battery 101, it is possible to improve the precision of a prediction of the life of the storage battery 101 in each of the storage battery system 100.

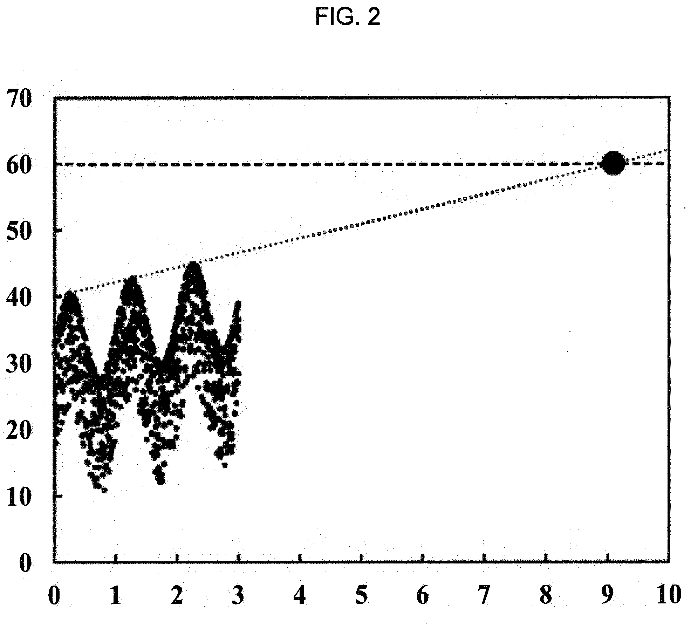

An example of a method of predicting the life of the storage battery 101 in each of the storage battery systems 100 will now be explained with reference to FIGS. 2 to 5.

FIG. 2 is a diagram illustrating a method of predicting the life of the storage battery based on the transition of the battery temperature. The vertical axis represents the battery temperature [°C], and the horizontal axis represents the elapsed time in years [years] . The small circles in FIG. 2 indicate the highest daily temperature measurements of the storage batteries. The highest temperature varies depending on the air temperature and the train services, but increases as the storage battery deteriorates, while going through season-dependent rises and drops. The dotted line is a line tangent to the upper bounds of the highest temperatures (upper-bound tangent). The broken line indicates a threshold for determining an over temperature abnormality (over temperature abnormality threshold). The timing at which the temperature of the storage battery goes higher than the over temperature abnormality threshold is defined as the end of the life. This end of the life is calculated as an intersection (indicated by a large circle) between the dotted line and the broken line, as a prediction of the time at which the over temperature abnormality occurs, that is, as a predicted life. At this time, the temperature measurements may be those collected from all of the respective battery cells, or some of the battery cells in the storage battery systems.

For example, the gradient and intercept of the upper-bound tangent in FIG. 2 correspond to the parameters required in predicting deterioration of the storage battery 101. When temperature measurements near the upper bound are low because of the air temperature and the train services, the gradient and intercept of the upper-bound tangent can be obtained by also referring to the temperature measurements of the other storage battery systems.

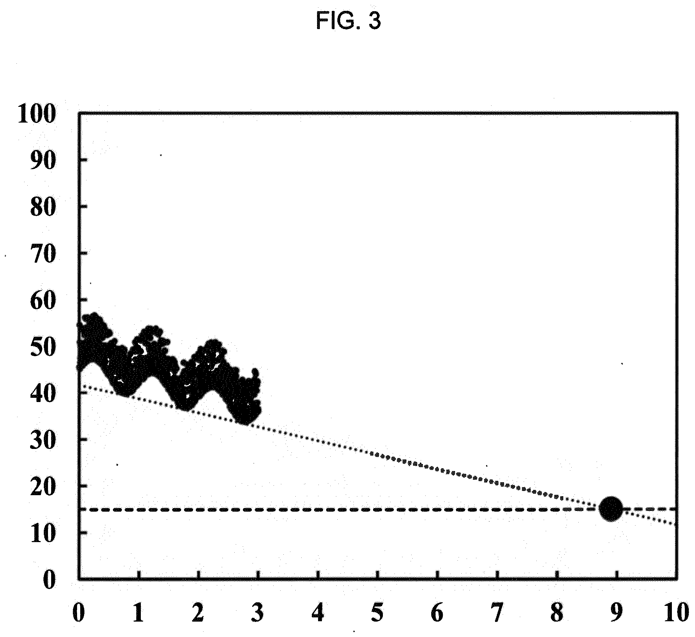

FIG. 3 is a diagram illustrating a method for predicting the life of the storage battery from the transition in the SOC estimations. The vertical axis represents the SOC [%], and the horizontal axis represents the elapsed time in years [years] . The small circles in FIG. 3 indicate the lowest daily SOC estimations of the storage batteries. These lowest sacs decline as the storage batteries deteriorate. The dotted line is a line tangent to the lower bounds of the lowest sacs (lower-bound tangent). The broken line indicates a threshold for determining an electricity shortage abnormality (an electricity shortage abnormality threshold). The timing at which the SOC estimation of the storage battery falls below the electricity shortage abnormality threshold is defined as the end of the life, and the intersection (indicated by a large circle) between the dotted line and the broken line is obtained as a prediction of the time at which the electricity shortage abnormality occurs, that is, as a predicted life. At this time, the lowest SOC estimation may be the lowest SOC estimation among those of all of the respective battery cells or all of the respective battery modules, or those of some of the battery cells or some of the battery modules in the storage battery systems.

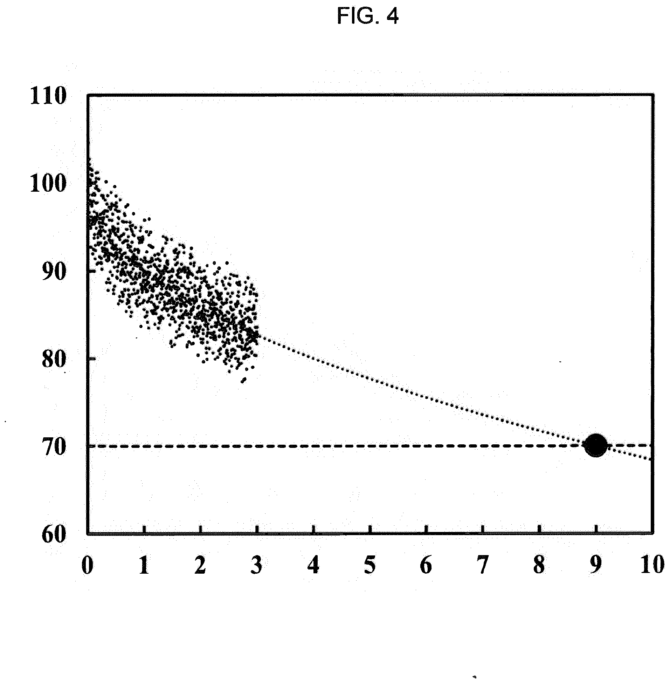

FIG. 4 is a diagram illustrating a method of predicting the life of the storage batteries from the transitions in the estimations of the capacity retention ratios. The vertical axis represents the capacity retention ratio [%], and the horizontal axis represents the elapsed time in years [years] . The small circles in FIG. 4 indicate daily estimations of the capacity retention ratios of the respective storage batteries. These estimations decline as the storage batteries deteriorate. The dotted line is a root-law approximation line drawn for the estimations. The broken line indicates a threshold for determining a capacity degradation abnormality (capacity degradation abnormality threshold). The timing at which the estimation of the storage battery capacity retention ratio falls below the capacity degradation abnormality threshold is defined as the life, and the intersection (indicated by a large circle) between the dotted line and the broken line is obtained as a prediction of the time at which the capacity degradation abnormality occurs, that is, a predicted life. At this time, the estimated capacity retention ratios may be those of all of the respective battery cells or all of the battery modules in the storage battery systems, or may be estimated capacity retention ratios of some of the battery cells or some of the battery modules in the storage battery systems.

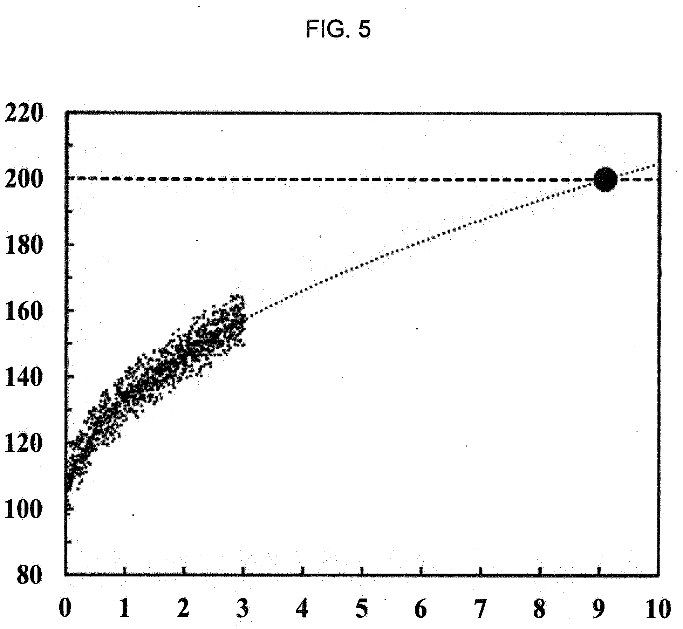

FIG. 5 is a diagram illustrating a method of predicting the life of the storage battery from the transition in the estimation of the resistance increase rate. The vertical axis represents the resistance increase rate [%], and the horizontal axis represents the elapsed time in years [years]. The small circles in FIG. 5 indicate estimations of daily resistance increase rates of the respective storage batteries. These estimations increase as the storage batteries deteriorate. The dotted line is a root-law approximation line drawn for the estimations. The broken line indicates a threshold for determining a resistance degradation abnormality (resistance degradation abnormality threshold). The timing at which the estimations of the resistance increase rate of the storage batteries exceed the resistance degradation abnormality threshold is defined as the end of the life, and the intersection (large circle) between the dotted line and the broken line is obtained as a prediction of the time at which the resistance degradation abnormality occurs, that is, as a predicted life. At this time, the estimations of the resistance increase rates may be those of all of the battery cells or all of the battery modules in the storage battery systems, or may be the estimations of the resistance increase rate of some of the battery cells or some of the battery modules in the storage battery systems.

The life prediction methods described above are some examples, and the life prediction method is not limited to the methods described above.

Use of an external server in the analysis is advantageous in that, for example, an analysis of long-term data over the years is made possible.

Returning to FIG. 1, the limit value determination unit 204 can determine the limit value for the storage battery 101 to be transmitted to each of the storage battery systems 100, based on a relationship between the lengths of the predicted life and the target life. Specifically, when the predicted life exceeds the target life, the limit is alleviated. When the predicted life is below the target life, the limit is made stricter.

Note that, in the present disclosure, the target life means a target such as a replacement cycle of the storage battery 101 to which the actual battery life is to be brought closer.

By improving the precision of the prediction of the life of the storage battery 101 in each of the storage battery systems 100, it is possible to change the limit value imposed on the storage battery 101, transmitted to each of the storage battery systems 100, appropriately.

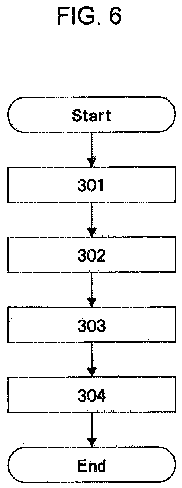

A process performed by the external server 200 according to the embodiment will now be explained with reference to FIG. 6. FIG. 6 is a flowchart illustrating the process performed by the external server 200 according to the embodiment.

To begin with, in step 301, the data storage unit 201 merges and stores the pieces of operation history data on the storage batteries 101, received from the plurality of storage battery systems 100.

In step 302, the operation history data analysis unit 202 then performs a statistical analysis on the operation history data stored in the data storage unit 201, and updates the parameter required in predicting deterioration of the storage battery 101.

In step 303, the life prediction unit 203 then predicts the life of the storage battery 101 in each of the storage battery systems 100, using the parameter calculated by the operation history data analysis unit 202 and the operation history data received from the storage battery system 100.

In step 304, the limit value determination unit 204 then determines the limit value for the storage battery 101 to be transmitted to each of the storage battery systems 100, based on a relationship between the lengths of the predicted life and the target life.

In the manner described above, the pieces of operation history data of the plurality of respective storage battery systems 100 are merged to the data storage unit 201 on the external server 200, and the operation history data analysis unit 202 makes a statistical analysis of the operation history data, and updates the parameter required in predicting the deteriorations of the storage battery 101. The life prediction unit 203 then predicts the life of the storage battery 101 in each of the storage battery systems 100, and the limit value determination unit 204 determines the limit value for the storage battery 101 in each of the storage battery systems 100 based on a relationship between the lengths of the predicted life and the target life. The limit value is fed back to each of the storage battery systems 100 via the wireless communication device 104. In this manner, the precision of the deterioration prediction model can be improved, and the limit value can be changed appropriately.

In the embodiment described above, the storage battery system includes a wireless communication device. However, a configuration in which the wireless communication device is included in an integrated control system or a driving device control system that controls the entire railway vehicle is also possible, in addition to the configuration in which the wireless communication device is included in the storage battery system. The configuration in which the wireless communication device is included in the storage battery system has an advantage that it is easier to cope with a case in which the storage battery system is manufactured by another manufacturer different that of the storage battery system. In addition, a configuration in which the wireless communication device is included in the integrated control system is an advantageous in that information other than that of the storage battery system can be taken into consideration in performing the control. The location where the wireless communication device is installed not limited to these locations.

### <Storage and transmission of operation history data by wireless communication device>

In order to extract a correlation between the actual load and the deterioration speed for each of the battery cells from the operation history data obtained by the remote monitoring system, it is necessary to keep acquiring and accumulating battery state data and load data over a long time period without any interruption.

A remote monitoring system for a storage battery system installed onboard a railway vehicle uses wireless communication, because the external server cannot connect to the storage battery system over the wire.

However, when the reception level of the radio waves of wireless communication is poor, the operation history data needs to be kept in a storage area of the wireless communication device in the storage battery system until the reception level of the radio waves recovers. If the operation history data is stored at shorter time intervals in order to improve the quality of the operation history data, the data may overflow when the level of radio wave reception remains poor, and only fragments of data may be obtained. By contrast, when the time intervals at which the respective pieces of data are stored become extended, the data quality deteriorates.

Therefore, when the reception level of the radio waves is poor, it is desirable to retain the operation history data in an appropriate data size and data quality.

The wireless communication device 104 is capable of storing therein the operation history data of the storage batteries 101 at pluralities of time intervals, and transmitting the stored operation history data to the external server 200.

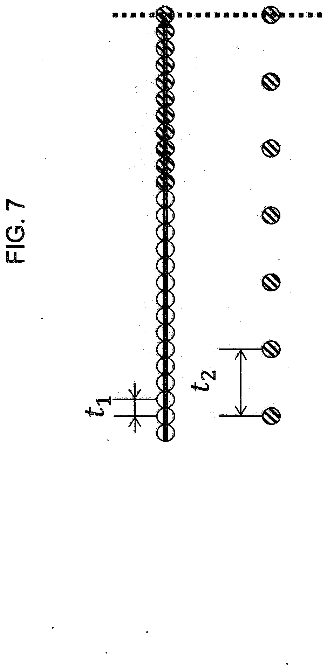

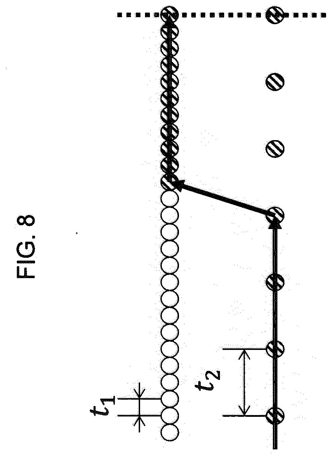

Explained now with reference to FIGS. 7 and 8 is how the wireless communication device 104 according to the embodiment stores and transmits operation history data. FIGS. 7 and 8 are charts illustrating how the wireless communication device 104 according to the embodiment stores and transmits the operation history data. FIGS. 7 and 8 illustrate storage and transmission corresponding to one item of the operation history data, that is, any one of current, voltage, temperature, SOC, capacity retention ratio, and resistance increase rate.

In FIGS. 7 and 8, circles in the upper row represent pieces of the operation history data stored at shorter time intervals (time intervals t₁), and the circles in the lower row represent the pieces of operation history data stored at longer time intervals (time intervals t₂). In other words, illustrated herein is an example of the operation history data under t₁ < t₂.

Note that the number of the pluralities of time intervals, that is, the number of rows in FIGS. 7 and 8 may be any number more than one, and is not limited to any particular number.

In FIGS. 7 and 8, the circles on the left side of the rows indicate operation history data stored earlier in time than the circles on the right side of the row, and the vertical dotted line on the right end indicates the present time.

The hatched circles indicate operation history data remaining in the storage area of the wireless communication device 104, and non-hatched circles indicate operation history data having overflowed and not remaining in the storage area of the wireless communication device 104. Arrows connecting the circles indicate past transmissions of the stored operation history data to the external server 200.

FIG. 7 illustrates an example in which the level of radio wave reception has remained good, so that the pieces of operation history data stored at shorter time intervals (time intervals t₁) are transmitted to the external server 200, without having the transmission withheld and resulting in an overflow. In this example, the operation history data stored at the shorter time intervals (time intervals t₁) is transmitted, and the operation history data stored at longer time intervals (time intervals t₂) remains not transmitted.

FIG. 8 illustrates an example in which the level of radio wave reception is poor, so that the pieces of the operation history data stored at the shorter time intervals (time intervals t₁) have remained not transmitted to the external server 200 and resulted in an overflow. In this example, for the time period in which the pieces of operation history data stored at the shorter time intervals (time intervals t₁) are lost, the operation history data stored at the long time intervals (time intervals t₂) is transmitted. For the time period in which the pieces of operation history data stored at the-shorter time intervals (time intervals t₁) are still remaining, the pieces of operation history data stored at the shorter time intervals (time intervals t₁) are transmitted.

As to the priorities by which the pieces of operation history data stored at pluralities of time intervals in the wireless communication device 104 are transmitted to the external server 200 by wireless communication, operation history data stored earlier in time is transmitted at the highest priority, among the pieces of operation history data not having been transmitted yet. Among the pieces of the operation history data stored at the same time, the operation history data stored at the shorter time intervals are transmitted at a higher priority. In this manner, even if the period of missed transmissions of the operation history data to the external server 200 becomes extended, due to the poor reception level of radio waves, a persistent long-term data loss can be avoided, and the operation history data stored at shorter time intervals are transmitted as much as possible to the external server 200.

The operation history data stored in the wireless communication device 104 may be any one or more of an instantaneous value, an average, and a root mean square. As a result, not only the operation history data stored at short time intervals but also the operation history data stored at long time intervals can be stored with data quality suitable for the analysis of the operation history data.

The pluralities of the time intervals at which the wireless communication device 104 stores therein the pieces of operation history data may be set for each item of the operation history data. Specifically, for the items of the operation history data fluctuating very much, e.g., current or voltage, shorter time intervals may be set to t₁ and t₂, respectively. For the items of the operation history data fluctuation of which is moderate, e.g., temperature and SOC, time intervals of moderate lengths may be set to t₁ and tz. For items of the operation history data the fluctuation of which is small, e.g., capacity retention ratio and resistance increase rate, long time intervals may be set to t₁ and t₂, respectively. The degrees by which the operation history data of each of the items fluctuates are, however, not limited to these examples. In this manner, the operation history data may be stored at pluralities of time intervals suitable for the degrees and frequencies by which the data fluctuates, for each item of the operation history data.

The operation history data corresponding to a predetermined time period may be stored in the wireless communication device 104 until the operation history data is transmitted. For example, operation history data corresponding to a time period in which a voltage or a temperature has exceeded a predetermined range or the operation history data of a time period corresponding to rapid charging may be stored until the operation history data is transmitted. In this manner, it is possible to make sure that important operation history data is transmitted.

### <Modification>

In the embodiment described above, an output of the life prediction unit 203 is input to the limit value determination unit 204. However, instead of or in addition to the configuration in which an output of the life prediction unit 203 is input to the limit value determination unit 204, the output of the life prediction unit 203 may be input to a predicted life notification unit.

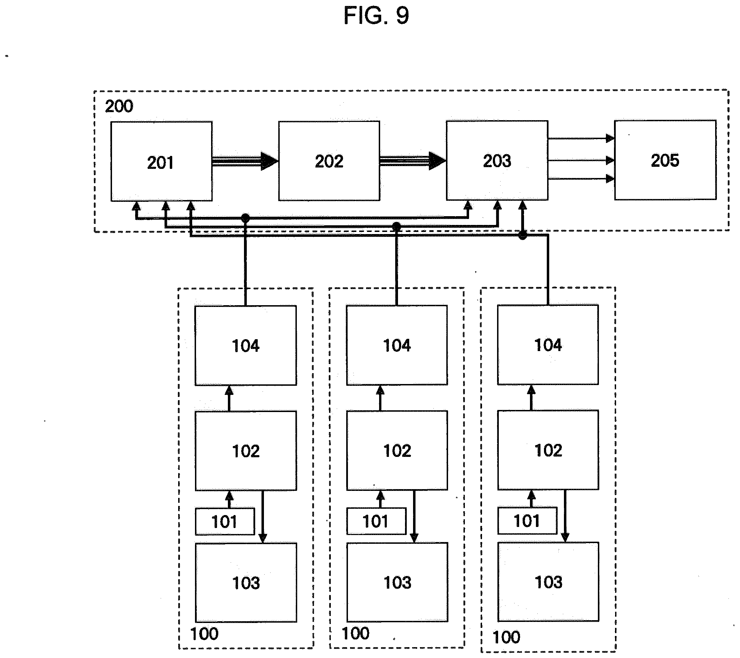

FIG. 9 is a diagram illustrating a configuration in which the output of the life prediction unit 203 is input to the predicted life notification unit 205. The predicted life notification unit 205 makes a notification of a predicted life, predicted by the life prediction unit 203. As a form of the predicted life notification unit 205, a notification by e-mail or display on a monitor are possible, but the present invention is not limited to these forms.

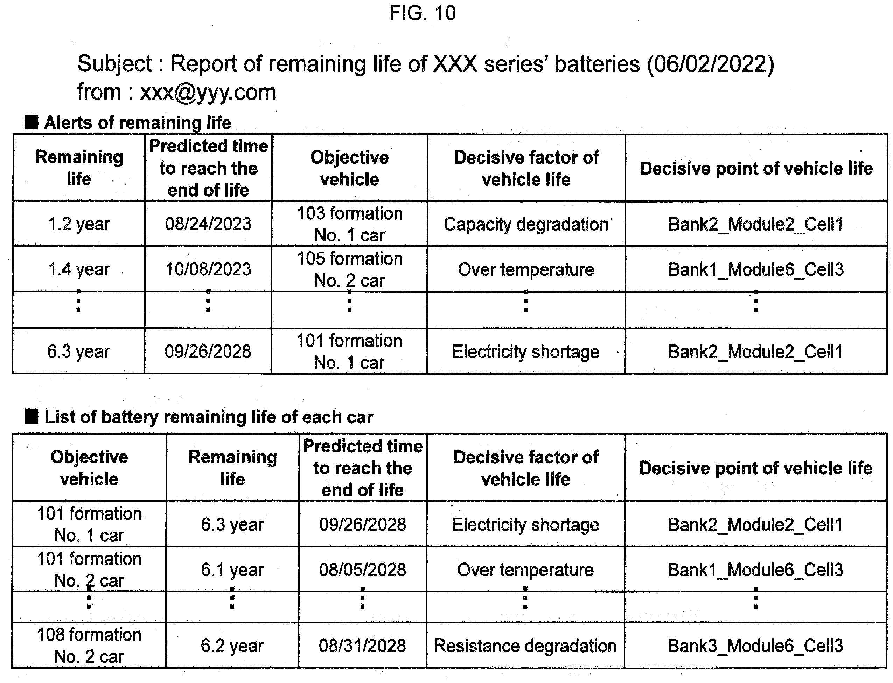

FIG. 10 is a diagram illustrating an example of the content of an e-mail notification. This notification (Report of remaining life of XXX series, batteries) includes Remaining life, Predicted time to reach the end of life, Objective vehicle, Decisive factor of vehicle life, and Decisive point of vehicle life. Remaining life is specified in years. Predicted time to reach the end of life is specified as a date. Objective vehicle is specified as formation and car number (No. car). Decisive factor of vehicle life specifies Capacity degradation, Over temperature, Electricity shortage, and Resistance degradation. Decisive point of vehicle life is specified as Bank, Module, and Cell. The table on the top (Alerts of remaining life) is sorted by remaining life, and the table on the bottom (List of battery remaining life of each car) is sorted by Objective vehicle. The predicted life notification unit 205 issues an e-mail notification the content of which is as specified above, to the terminal used by a person involved in vehicle maintenance. Alternatively, the predicted life notification unit 205 may be configured as a graphic user interface, and similar content may be displayed on a monitor of a terminal having logged into the remote monitoring system. Based on the e-mail notification or display on the monitor, the person involved in vehicle maintenance changes the control of the storage battery, for example.

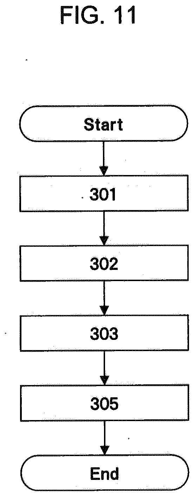

FIG. 11 is a flowchart illustrating the process performed by the external server 200 according to a modification. Steps 301 to 303 are the same as steps 301 to 303 described with reference to FIG. 6. In step 305, the predicted life notification unit 205 makes a notification of the predicted life.

Explained in the embodiment described above is an example in which the remote monitoring system is applied to remote monitoring of the storage batteries mounted on the railway vehicle. However, the field of the applications of the present invention is not limited thereto. The present invention is applicable to general remote monitoring of storage batteries.

The present invention is not limited to the embodiments described above, and includes various modifications. For example, the embodiments have been described in detail for easy understanding of the present invention, and are not necessarily limited to those having all of the configurations described above. In addition, another configuration may be added to deleted from, or replaced with a part of the configuration according to the embodiment. In addition, some or all of the configurations, functions, the procedures or like explained above may be implemented as hardware, through designing of an integrated circuit, for example. In addition, each of the configurations, the functions, and the like described above may be implemented as software by causing a processor to parse and to execute a program that implements the function. Information such as a program, a table, and a file for implementing each of the functions may be stored in a recording device such as a memory, a hard disk, and a solid-state drive (SSD), or a recording medium such as an IC card, an SD card, and a digital versatile disk (DVD) .

### Reference Signs List

- 100: storage battery system
- 101: storage battery
- 102: battery management device
- 103: charge/discharge control device
- 104: wireless communication device
- 200: external server
- 201: data storage unit
- 202: operation history data analysis unit
- 203: life prediction unit
- 204: limit value determination unit
- 205: predicted life notification unit

## Claims

1. A remote monitoring system comprising:
a plurality of storage battery systems; and
an external server, wherein
the external server includes:
a data storage unit that stores therein operation history data on a storage battery, received from the plurality of storage battery systems;
an operation history data analysis unit that analyzes the operation history data stored in the data storage unit, and that calculates a parameter required in predicting deterioration of the storage battery; and
a life prediction unit that predicts a life of the storage battery of each of the storage battery systems using the parameter calculated by the operation history data analysis unit, and the operation history data received from the corresponding storage battery system.

2. The remote monitoring system according to claim 1, wherein the external server includes a limit value determination unit that determines a limit value for the storage battery, to be transmitted to each of the storage battery systems, based on a relationship between a lengths of a predicted life and a target life.

3. The remote monitoring system according to claim 1 or 2, wherein the external server includes a predicted life notification unit that makes a notification of a predicted life.

4. The remote monitoring system according to any one of claims 1 to 3, wherein the remote monitoring system includes a wireless communication device, and the wireless communication device stores therein the operation history data of the storage battery at a plurality of time intervals, and transmits the stored operation history data to the external server.

5. The remote monitoring system according to claim 4, wherein the wireless communication device transmits the operation history data stored earlier in time at a highest priority, among pieces of operation history data not having been transmitted yet, and transmits the operation history data stored at shorter time intervals at a higher priority, when there are a plurality of pieces of operation history data stored at same time.

6. The remote monitoring system according to claim 4 or 5, wherein the operation history data stored in the wireless communication device is any one or more of an instantaneous value, an average value, and a root mean square.

7. The remote monitoring system according to any one of claims 4 to 6, wherein the plurality of time intervals are set for each item of the operation history data stored in the wireless communication device.

8. The remote monitoring system according to any one of claims 4 to 7, wherein the wireless communication device stores the operation history data corresponding to a predetermined time period until the operation history data is transmitted.

9. The remote monitoring system according to any one of claims 4 to 8, wherein the wireless communication device is included in the storage battery system, an integrated control system, or a driving device control system.

10. The remote monitoring system according to any one of claims 1 to 9, wherein the storage battery system is mounted on a railway vehicle.

11. A storage battery system comprising a wireless communication device, wherein the wireless communication device stores therein operation history data of a storage battery at a plurality of time intervals, and transmits the stored operation history data to an external server.

12. The storage battery system according to claim 11, wherein the wireless communication device transmits the operation history data stored earlier in time at a highest priority, among pieces of operation history data not having been transmitted yet, and transmits the operation history data stored at shorter time intervals at a higher priority, when there are a plurality of pieces of operation history data stored at same time.

13. The storage battery system according to claim 11 or 12, wherein the operation, history data stored in the wireless communication device is any one or more of an instantaneous value, an average, and a root mean square.

14. The storage battery system according to any one of claims 11 to 13, wherein the plurality of time intervals are set for each item of the operation history data stored in the wireless communication device.

15. The storage battery system according to any one of claims 11 to 14, wherein the wireless communication device stores the operation history data corresponding to a predetermined time period until the operation history data is transmitted.

16. The storage battery system according to any one of claims 11 to 15, wherein the storage battery system is mounted on a railway vehicle.

17. A method for controlling a remote monitoring system including a plurality of storage battery systems and an external server, the method comprising:
causing a data storage unit included in the external server to store therein operation history data on a' storage battery, received from the plurality of storage battery systems;
causing an operation history data analysis unit included in the external server to analyze the operation history data stored in the data storage unit, and that calculates a parameter required in predicting deterioration of the storage battery; and
causing a life prediction unit included in the external server to predict a life of the storage battery of each of the storage battery systems using the parameter calculated by the operation history data analysis unit, and the operation history data received from the corresponding storage battery system.
